# EUROPÄISCHE PATENTSCHRIFT

(11) **EP 2 049 813 B1**
(45) Veröffentlichungstag und Bekanntmachung des Hinweises auf die Patenterteilung: **25.01.2017**
(21) Anmeldenummer: 07786362.9
(22) Anmeldetag: 26.07.2007
(51) Int. Cl.: F16D 65/14

(54) **ELEKTROMECHANISCH BETÄTIGBARE SCHEIBENBREMSE MIT BETÄTIGUNGSSTÖSSEL**
ELECTROMECHANICALLY ACTUABLE DISC BRAKE WITH ACTUATING PLUNGER
FREIN À DISQUE POUVANT ÊTRE ACTIONNÉ DE FAÇON ÉLECTROMÉCANIQUE AVEC UN POUSSOIR D'ENTRAÎNEMENT

(30) Priorität: 03.08.2006 DE 102006036279
(43) Veröffentlichungstag der Anmeldung: 22.04.2009
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GRUBER, Robert, 83539 Pfaffing (DE); TRIMPE, Robert, 82234 Wessling (DE)
(74) Vertreter: Mattusch, Gundula
(86) Internationale Anmeldenummer: PCT/EP2007/006647
(87) Internationale Veröffentlichungsnummer: WO 2008/014927

(56) Entgegenhaltungen:
- WO-A-03/071150
- WO-A-2007/082658
- FR-A- 2 855 574
- US-A- 3 809 190

## Beschreibung

Die Erfindung betrifft eine elektromechanisch betätigte Scheibenbremse in selbstverstärkender Bauart nach dem Oberbegriff des Anspruchs 1.

Scheibenbremsen, welche den Leistungsbedarf des Antriebs durch die Nutzung von Selbstverstärkungseffekten reduzieren, sind seit langem bekannt.

Typische Beispiele derartiger Bremsen sind z.B. in der DE 101 56 348 C1, in der eigenen älteren, gattungsgemäßen Patentanmeldung DE 101 39 913.8 und in der DE 10 2005 030 618.7 beschrieben.

Bremsen dieser Bauart ist gemeinsam, dass die Abstützung der auf den Bremsbelag wirkenden Umfangskräfte über ein Keil- oder ein Rampensystem erfolgt, welches die Selbstverstärkung bewirkt.

Dabei wird die auf den Bremsbelag wirkende Reibkraft von einem mit dem Bremsbelag verbundenen und mit diesem in Umfangsrichtung verschieblichen Teil der Selbstverstärkungs-Einrichtung über Rollkörper oder mittels Gleitkontakt auf einen in Umfangsrichtung stationären Teil der Selbstverstärkungseinrichtung übertragen.

Bei nicht in selbstverstärkender Bauart ausgeführten Scheibenbremsen mit direkter Hebelbetätigung, wie z.B. in der DE 40 32 885 oder der WO 97/22 814 beschrieben, werden die Betätigungsstößel bzw. die Brücke mit eingeschraubten Stößeln zumindest in Umfangsrichtung mit engem Spiel geführt. In der DE 40 32 885 ist darüber hinaus eine schwenkbewegliche Führung der Brücke am Bremsdrehhebel vorgesehen.

Die Erfindung setzt zunächst bei der Idee an, eine Hebelbetätigung mit einem Drehhebel mit einer zur Bremsscheibendrehachse orthogonalen Drehachse auch zum Zuspannen einer selbstverstärkender Scheibenbremse zu nutzen.

Bei selbstverstärkenden Scheibenbremsen ist zur Realisierung der Selbstverstärkung jedoch eine Verschiebung des Bremsbelages in Drehrichtung der Bremsscheibe erforderlich.

Daraus ergibt sich bei verschieblich oder schwenkverschieblich geführten Betätigungsstößeln eine Relativbewegung zwischen Bremsbelag bzw. Belagdruckplatte und Betätigungsstößel(n).

Da über die Kontaktstelle zwischen Betätigungsstößel und Druckplatte hohe Kräfte sowohl in zustellender als auch rückziehender Richtung übertragen werden, erfordert der Ausgleich der Relativbewegung geeignete konstruktive Maßnahmen.

In der WO 03/07 1150 A wurde daher eine selbstverstärkende Scheibenbremse mit Spindelantrieb bzw. mit einem direkt rotatorisch betätigten Exzenterantrieb beschrieben, bei welcher zur Betätigung der Bremse der Abstand zwischen Brücke und der Druckplatte durch ein über eine Kurbel angetriebenes Pleuel eingestellt wird. Die Pleuelanbindung an die Druckplatte erlaubt eine Umfangsbewegung von Belag und Druckplatte mittels einer Schwenkbewegung des Pleuels, wobei der andere Gelenkpunkt des Pleuels an der Brücke achsfest bleibt. Die Verschleißnachstellung erfolgt bei dieser Ausführungsform der selbstverstärkenden Scheibenbremse zwischen dem Bremsengehäuse und der Brücke

Bei der hebelbetätigten Bremse besteht jedoch zusätzlich eine Schwenkbewegung um die über Kreuz angeordnete Schwenkachse des Hebelexzenters. Weiterhin erschwerend wirkt sich die Notwendigkeit aus, auch die Nachstelldrehbewegung in den um zwei zueinander senkrecht stehenden Achsen schwenkbaren Betätigungsstößel einzuleiten.

Zum Stand der Technik bzgl. selbstverstärkend ausgelegter Scheibenbremsen werden noch die WO 2007/082658 A und die US 3 809 190 A genannt.

Vor diesem Hintergrund ist es die Aufgabe der Erfindung, das Konzept einer Hebelbetätigung in einfacher Weise auch für selbstverstärkende Scheibenbremsen, insbesondere der gattungsgemäßen Art, nutzbar zu machen.

Die Erfindung löst diese Aufgabe durch den Gegenstand des Anspruchs 1.

Vorteilhafte Ausgestaltungen sind den Unteransprüchen zu entnehmen.

Vorzugsweise ist der Betätigungsstößel am Bremsdrehhebel und an der Druckplatte oder dem zuspannseitigen Bremsbelag derart schwenkbar befestigt, dass er Zug- und Druckkräfte zwischen dem Bremsbelag und seinem Antrieb (z.B. ein Elektromotor mit einem Gewindetrieb) übertragen kann.

Der Begriff des Betätigungsstößels bzw. Betätigungsstempels ist nicht zu eng zu fassen. Er umschließt insbesondere auch längeveränderliche Baueinheiten aus mehreren Elementen.

Für eine direkt hebelbetätigte Scheibenbremse mit Selbstverstärkung wurde damit eine Koppelung des Betätigungsstößels mit der Druckplatte des Bremsbelages gefunden, über welche sowohl zustellende als auch rückziehende Betätigungskräfte und Bewegungen sicher und zuverlässig übertragen werden können.

Bevorzugt ist der Betätigungsstößel an der Exzenterdrehachse des Bremsdrehhebels und an der Druckplatte oder dem zuspannseitigen Bremsbelag derart gelagert und befestigt, dass er Schwenkbewegungen des Bremsdrehhebels und Umfangsschiebebewegungen des Bremsbelages und ggf,. der Druckplatte durch Schwenken in zwei zueinander senkrecht stehenden Schwenkrichtungen ausgleichen kann.

Damit wird bei geringem benötigtem Bauraum sowohl die zur Erzielung des Selbstverstärkungseffektes notwendige Umfangsbewegung der Druckplatte ermöglicht als auch ein Ausgleich der Kippbewegung des Betätigungsstößels aufgrund der ausschließlich drehbeweglichen Führung im Exzenter des Bremsdrehhebels.

Die Kraftübertragung erfolgt dabei sowohl auf der Bremsdrehhebelseite als auch auf der Belagdruckplattenseite über Gelenkbolzen, wobei der Bolzen des Bremsdrehhebels zu demjenigen der Belagdruckplatte mit überkreuzender Drehachse angeordnet ist.

Vorzugsweise ist die Betätigungsstößel-Einheit an beiden Montageenden mit Schwenklagern, z.B. Gleitkalottenlagern, ausgerüstet.

Ergänzend wird nach einer besonders vorteilhaften Ausgestaltung auch die Einleitung der Nachstelldrehbewegung in den in zwei Richtungen schwenkbaren Betätigungsstößel ermöglicht.

Dazu ist der Betätigungsstößel zunächst als axial längenveränderliche, insbesondere teleskopierbare Baueinheit ausgebildet, welche eine Längenveränderung des Bremsstempels zum Ausgleich von Beklag- und/oder Scheibenverschleiß ermöglicht. Vorzugsweise besteht die Betätigungsstößel-Baueinheit aus Betätigungsstößel, Gewindespindel und Gelenklagergehäuse und ist über ein Synchronisationsgetriebe mit einer Nachstelleinrichtung gekoppelt.

Besonders bevorzugt ist die Betätigungsstößel-Einheit aus dem Betätigungsstößel, der Gewindespindel und dem Gelenklagergehäuse zur Übertragung der Nachstelldrehbewegung baulich einfach mit einem Zahnrad verbunden.

Dabei ist die Gestaltung des Zahnrades vorzugsweise so, dass bei nicht betätigter Bremse, also in Ruheposition des Betätigungsstößels, ein enges Zahnspiel zu den weiteren gekoppelten Zahnrädern besteht.

Bei betätigter Bremse werden jedoch die Zahnräder durch die Zustellbewegung des Betätigungsstößels so weit außer Eingriff gebracht, dass die dann erfolgende Schwenkbewegung des Betätigungsstößels ermöglicht wird.

Für die Gelenklager an der Bremsdrehhebel - Exzenterdrehachse sowie an der Druckplattenanbindung des Betätigungsstößels sind auch alternative Ausführungsformen möglich.

An der Bremsdrehhebel-Exzenterachse ist z.B. auch ein schwenkbares Tonnenrollen - Lager verwendbar. An der Anbindungsstelle an der Druckplatte sind zum Ausgleich der aus der schwenkbeweglichen Führung am Bremsdrehhebel resultierenden Schwenkbewegung auch einfachere Lösungen denkbar. Es kann bereits eine leicht ballige Drehachse ausreichend sein und/oder eine zu beiden Endbereichen hin im Durchmesser leicht aufgeweitete Lagerbuchse.

Vorzugsweise ist nach einer auch selbstständig zu betrachtenden weiteren Erfindung das stationäre Bauteil der Selbstverstärkungseinrichtung, welches mit der Nachstellvorrichtung verbunden, derart mit geringem Spiel parallel zur Bremsscheibendrehachse zwischen Führungsflächen des achsfesten Bauteils der Bremse aufgenommen, dass bei Bremsungen die auftretenden Umfangskräfte unmittelbar von diesem stationären Bauteil der Selbstverstärkungseinrichtung auf das achsfeste Bauteil der Bremse abgestützt werden.

Nachfolgend wird die Erfindung anhand eines Ausführungsbeispiel näher beschrieben. Es zeigen:
Fig. 1 eine erste Schnittansicht einer Schiebesattel-Scheibenbremse; und
Fig. 2 eine weitere Schnittansicht der Scheibenbremse aus Fig. 1.

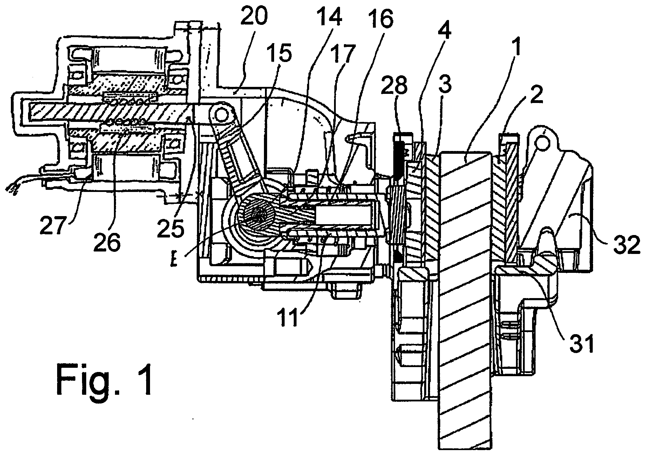

Fig. 1 zeigt eine (Teilbelag-) Schiebesattel-Scheibenbremse, mit beidseits einer Bremsscheibe 1 angeordneten Bremsbelägen 2 und 3.

Die Ausführung als Schiebsattel-Scheibenbremse ist eine mögliche Bauform. Ausgestaltungen als Schwenksattel-Scheibenbremse oder als Festsattel-Scheibenbremse oder Mischformen der Bauarten sind denkbar, hier aber nicht dargestellt.

Die Schiebesattel-Scheibenbremse weist einen die Bremsscheibe 1 im Umfangsrandbereich übergreifenden ein oder hier mehrteiligen Bremssattel 32 (mit einem Bremssatteldeckel 20) auf, welcher eine Zuspannvorrichtung aufnimmt. Der Bremssattel 32 ist mittels einer Sattelschiebeführung 38/39 an einem achsfesten Bremsträger 31 verschieblich geführt.

Ein Elektromotor 27 am Bremsengehäuse 20 wirkt über einen Gewindetrieb, hier einen Kugelgewindetrieb 26, auf einen vorzugsweise exzentrisch im Bremssattel 20 gelagerten Bremsdrehhebel 15, der infolge einer Betätigung durch den Kugelgewindetrieb um eine senkrecht zur Bremsscheibendrehachse D ausgerichtete Drehachse verschwenkbar ist.

Der Bremsdrehhebel 15 wirkt wiederum über wenigstens einen Bremsstempel 11 direkt oder über eine Druckplatte auf einen zuspannseitigen Bremsbelag 3.

Dabei sind der Bremsstempel 11 und der Bremsdrehhebel 15 sowie der Bremsstempel 11 und die Druckplatte 4 gelenkig miteinander derart verbunden, dass der Bremsstempel 11 beim Zuspannen der Scheibenbremse ganz oder zumindest im wesentlichen einer Bewegung des zuspannseitigen Bremsbelages 3 in Umfangsrichtung der Bremsscheibe 1 folgen kann.

Die Zuspannvorrichtung ist dabei derart ausgelegt, dass auf den Bremsbelag 3 Zug- und Druckkräfte einwirken können, d.h. der Elektromotor kann zum Zuspannen und Lösen der Bremse genutzt werden.

Der betätigungsseitige Bremsbelag 3 ist in der Druckplatte 4 aufgenommen.

Die Druckplatte 4 ist parallel zur Bremsscheibenreibfläche verschieblich und steht über in ihr gelagerten Rollkörper, hier Kugeln 5 und 6, mit Rampen 7 und 8 von axial längenveränderlichen Druckstempeln bzw. Nachstellkolben 9 und 10 in Wirkverbindung, die in einem spitzen Winkel von mehr als 0 und weniger als 90° zur Bremsscheibenreibfläche ausgerichtet sind. Die Rampen könnten auch oder ergänzend auch in der Druckplatte 4 ausgebildet sein. Die Kugeln (oder sonstige Rollkörper) wären in diesem Fall in kalottenartigen Ausnehmungen der Druckstempel geführt, die dennoch Teil der Selbstverstärkungseinrichtung im Sinne des Anspruchs 1 wären.

An der Druckplatte 4 ist - wie bereits erwähnt - der Betätigungsstößel 11 zur Übertragung der in Richtung der Bremsscheibe wirkenden Druck -und Zugkräften angelenkt.

Diese Anlenkung erfolgt hier mittels eines Bolzens 33 und einem Gabelkopf 34.

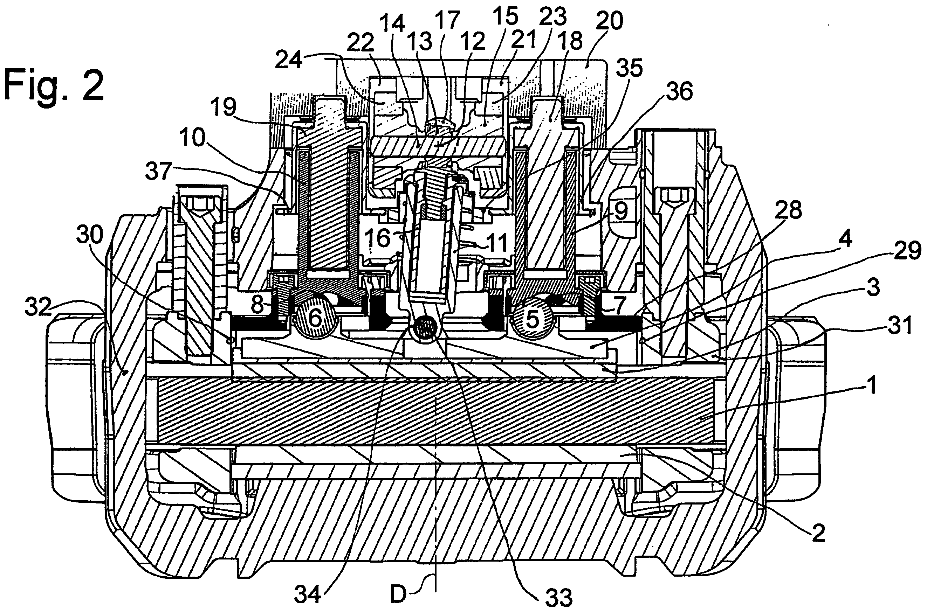

Diese gelenkige Verbindung erlaubt bei einer Umfangsverschiebung der Druckplatte 4 eine Schwenkbewegung eines Betätigungsstößels 11 um den Kugelmittelpunkt 12 (der auf der Exzenterdrehachse E - Fig. 2 - liegt) eines Kalottenlagers 13.

Das Kalottenlager 13 ist auf der Exzenterachse 14 des Bremsdrehhebels 15 zur Übertragung der Betätigungskräfte auf den Betätigungsstößel 11 aufgenommen.

Der Betätigungsstößel 11 ist mit einem Gewindestößel 16 verschraubt, wobei der Gewindestößel 16 wiederum fest mit einem Gelenklagergehäuse 17 verbunden ist.

Der Betätigungsstößel 11 bildet mit dem Gewindestößel 16 einen zum Zwecke der Verschleiß - Nachstellung längenveränderlichen Stößel bzw. Nachstellkolben.

In gleicher Weise sind die beiden Druckstempel 9 und 10 mit den Gewindespindeln 18 und 19, welche die Abstützkraft der Druckstempel 9/10 auf das Bremsengehäuse bzw. einen Bremssattel 20 übertragen, verschraubt.

Die Gewindespindeln 18/19 sind mit dem Gewindestößel 17 durch ein Synchronisationsgetriebe verbunden. Hierdurch wird erreicht, dass die Antriebs - Drehbewegung des Nachstellerantriebs nur synchron auf die beiden Druckstempel 9/10 und den Betätigungsstößel 11 einwirkt.

Der Bremsdrehhebel 15 ist in den zwei Lagerböcken 21/22 mittels zweier Wälzlager 23/24 reibungsarm gelagert.

Die Lagerböcke 21/22 sind mit dem Bremsengehäuse 20 fest verbunden.

Am Hebelarm des Bremsdrehhebels 15 ist eine Spindel 25 eines Kugelgewindetriebes 26 zur Übertragung von Zug- und Druck - Betätigungskräfte befestigt.

Der Kugelgewindetrieb 26 wird zur Betätigung der Bremse von dem Elektromotor 27 angetrieben.

Die Druckstempel 9/10 sind an ihrem der Bremsscheibe 1 zugewandten Ende in einer Führungsplatte 28 derart aufgenommen bzw. ausgestaltet, dass auf die Rampen 7/8 parallel zur Bremsscheibenreibfläche wirkende Abstützkräfte in die Führungsplatte 28 eingeleitet und von dieser, je nach Drehrichtung der Bremsscheibe, an den Führungsflächen 29 oder 30 auf den Bremsträger 31 abgeleitet werden.

Die Führung der Druckstempel 9/10 und des Betätigungsstößels 11 erfolgt an deren zu Bremsscheibe 1 gewandten Ende ausschließlich über die Führungsplatte 28 und den Bremsträger 31.

Der Bremssattel 32 und die Nachstelleinrichtung 35/36/37 sowie die Sattelschiebeführung 38/39 sind von den Umfangskräften entlastet.

Dabei sind die Bremsstempel 9, 10 vorzugsweise einfach direkt an der Führungsplatte 28 verschraubt.

Nachfolgend sei beispielhaft eine Bremsung mit dieser Scheibenbremse beschrieben:
Beim Erkennen eines Bremswunsches über die Betätigung des Bremspedals und damit des mit dem Bremspedal verbundenen Brems - Sollwertgebers wird der Elektromotor 27 durch das elektronische Bremssteuergerät zur Erzeugung einer Zustellbewegung des Kugelgewindetriebes 26 angesteuert.

Die Spindel 25 des Kugelgewindetriebes 26 bewegt den Hebelarm des Bremsdrehhebels 15 in Richtung der Bremsscheibe.

Der Bremsdrehhebel 15 wird dabei in seinen Lagern 23/24 verschwenkt und bewegt damit auch seine Exzenterwelle 14 und damit das Kalottenlager 13 entsprechend der Hebelübersetzung in Richtung der Bremsscheibe. Die Bewegung des Kalottenlagers wird über den Betätigungsstößel bzw. über die Bauteilkette 12 => 13 => 17 => 16 => 11 =>33 => 34 auf die Druckplatte 4 übertragen.

Die Druckplatte 4 wird dabei zunächst zur Überwindung des Lüftspieles mit dem Bremsbelag 3 rechtwinklig zu deren Reibfläche auf die Bremsscheibe 1 zu bewegt. Bei Anlegen des Bremsbelages 3 an die Reibfläche der Bremsscheibe 1 werden der Bremsbelag 3 und die damit verbundene Druckplatte 4 durch die entstehende Reibkraft von der Bremsscheibe 1 in deren Drehrichtung mitbewegt.

Die Kugeln 5/6 werden an den Rampen 7/8 entlang geführt und bewirken dabei auf die Druckplatte 4 zusätzlich zu deren Umfangsbewegung eine verstärkte Bewegung auf die Bremsscheibe zu. Die vom Betätigungsstößel 11 eingeleitete Anlegekraft wird dabei entsprechend der erhöhten Aufspreizung des Bremssattels 32 verstärkt. Infolge der Umfangsverschiebung der Druckplatte 4 führt der Betätigungsstößel 11 eine Schwenkbewegung um das Kalottenlager 13 und den Bolzen 33 aus. Der reaktionsseitige Bremsbelag 2 wird wie bei Schiebsattelbremsen üblich infolge einer Verschiebung des Bremssattels an die Bremsscheibe 3 gelegt. Hier muß keine Selbstverstärkungseinrichtung vorgesehen sein.

### Bezugszeichen

- Bremsscheibe: 1
- Bremsbeläge: 2, 3
- Druckplatte: 4
- Kugeln: 5 und 6
- Rampen: 7 und 8
- Druckstempel: 9 und 10
- Betätigungsstößel: 11
- Kugelmittelpunkt: 12
- Kalottenlager: 13
- Exzenterachse: 14
- Bremsdrehhebel: 15
- Gewindestößel: 16
- Gelenklagergehäuse: 17
- Gewindespindeln: 18 und 19
- Bremssattel: 20
- Lagerböcke: 21/22
- Wälzlager: 23/24
- Spindel: 25
- Kugelgewindetrieb: 26
- Elektromotor: 27
- Führungsplatte: 28
- Führungsflächen: 29 oder 30
- Bremsträger: 31
- Bremssattel: 32
- Bolzen: 33
- Gabelkopf: 34
- Nachstelleinrichtung: 35/36/37
- Sattelschiebeführung: 38/39

## Patentansprüche

1. Elektromechanisch betätigbare Scheibenbremse in selbstverstärkender Bauart, mit
a. einem Bremssattel (32, 20), wenigstens einem zuspannseitigen und einem reaktionsseitigen Bremsbelag (2, 3) und einer Bremsscheibe (1),
b. einem elektromechanischen Antrieb (27) und einer Zuspannvorrichtung zum Zuspannen des Bremsbelages, die eine Selbstverstärkungseinrichtung aufweist,
c. und einem ein- oder mehrteiligen Betätigungsstößel (11), welcher direkt oder über eine Druckplatte (4) auf den zuspannseitigen Bremsbelag einwirkt, und
d. mit wenigstens einer Nachstellvorrichtung (18, 9; 19, 10) zum Nachstellen von Belag- und/oder Scheibenverschleiß, **dadurch gekennzeichnet, dass**
e. die Zuspannvorrichtung einen Bremsdrehhebel (15) aufweist, der auf den Betätigungsstößel (11) einwirkt, wobei der Betätigungsstößel (11) am Bremsdrehhebel (15) und an der Druckplatte (4) oder dem zuspannseitigen Bremsbelag (3) schwenkbar gelagert ist,
f. derart, dass er bei einem Zuspannen der Scheibenbremse einer Bewegung des zuspannseitigen Bremsbelages (3) in Umfangsrichtung der Bremsscheibe (1) folgen kann.

2. Scheibenbremse nach Anspruch 1, **dadurch gekennzeichnet, dass** der Betätigungsstößel (11) am Bremsdrehhebel (15) und an der Druckplatte (4) oder dem zuspannseitigen Bremsbelag (3) mit überkreuzender Drehachse schwenkbar gelagert ist.

3. Scheibenbremse nach Anspruch 1 oder 2, **dadurch gekennzeichnet, dass** der Betätigungsstößel (11) am Bremsdrehhebel (15) und an der Druckplatte (4) oder dem zuspannseitigen Bremsbelag derart schwenkbar befestigt ist, dass Zug- und Druckkräfte an einen Elektromotor (27) als der elektromechanische Antrieb und dem zuspannseitigen Bremsbelag (3) übertragbar sind.

4. Scheibenbremse nach Anspruch 1, 2 oder 3, **dadurch gekennzeichnet, dass** der Betätigungsstößel (11) an einer Exzenterdrehachse (E) des Bremsdrehhebels (15) und an der Druckplatte (4) oder dem zuspannseitigen Bremsbelag (3) derart gelagert und befestigt ist, dass er Schwenkbewegungen des Bremsdrehhebels (15) und Umfangsschiebebewegungen des Bremsbelages (3) und ggf,. der Druckplatte (4) durch Schwenken in zwei zueinander senkrecht stehenden Schwenkrichtungen ausgleichen kann.

5. Scheibenbremse nach einem der vorstehenden Ansprüche, **dadurch gekennzeichnet, dass** der Betätigungsstößel (11) an seinen beiden Montageenden mit Schwenklagern, z.B. Gleitkalottenlagern, versehen ist, wobei die Kraftübertragung sowohl auf der Bremsdrehhebelseite als auch auf der Druckplattenseite über Gelenkbolzen erfolgt, wobei der Gelenkbolzen des Bremsdrehhebels zu demjenigen der Druckplatte (4) mit überkreuzender Drehachse angeordnet ist.

6. Scheibenbremse nach einem der vorstehenden Ansprüche, **dadurch gekennzeichnet, dass** der Betätigungsstößel (11) mehrteilig ausgebildet ist.

7. Scheibenbremse nach einem der vorstehenden Ansprüche, **dadurch gekennzeichnet, dass** zwischen dem Elektromotor (27) und dem Bremsdrehhebel (15) ein Gewindetrieb angeordnet ist.

8. Scheibenbremse nach einem der vorstehenden Ansprüche, **dadurch gekennzeichnet, dass** der Betätigungsstößel (10) als axial längenveränderliche, insbesondere teleskopierbare Betätigungsstößel-Baueinheit zum Ausgleich von Belag- und/oder Scheibenverschleiß ausgebildet ist.

9. Scheibenbremse nach Anspruch 8, **dadurch gekennzeichnet, dass** die Betätigungsstößel-Baueinheit den eigentlichen Betätigungsstößel (10), eine Gewindespindel (16) und Gelenklagergehäuse (17) aufweist.

10. Scheibenbremse nach einem der vorstehenden Ansprüche 8 oder 9, **dadurch gekennzeichnet, dass** die Betätigungsstößel-Baueinheit zur Übertragung der Nachstelldrehbewegung über ein Synchronisationsgetriebe mit einer Nachstelleinrichtung (9, 18 und 10, 19) gekoppelt ist.

11. Scheibenbremse nach einem der vorstehenden Ansprüche 8 bis 10, **dadurch gekennzeichnet, dass** die Betätigungsstößel-Baueinheit mit einem Zahnrad (35) verbunden ist, das derart ausgestaltet ist, dass bei nicht betätigter Bremse ein enges Zahnspiel zu weiteren gekoppelten Zahnrädern (36, 37) besteht und dass bei betätigter Bremse die Zahnräder durch die Zustellbewegung des Betätigungsstößels so weit außer Eingriff gebracht sind, dass die dann erfolgende Schwenkbewegung des Betätigungsstößels (10) ermöglicht wird.

12. Scheibenbremse nach einem der vorstehenden Ansprüche, **dadurch gekennzeichnet, dass** ein Drehlager an der Bremsdrehhebel-Exzenterachse als Tonnenrollen-Lager ausgestaltet sind.

13. Scheibenbremse nach einem der vorstehenden Ansprüche, **dadurch gekennzeichnet, dass** wenigstens eines oder zwei Drehlager vorgesehen sind, die als ballige Drehachsen oder als eine zu beiden Endbereichen hin im Durchmesser leicht aufgeweitete Lagerbuchse ausgebildet sind.

## Claims

1. Electromechanically actuable disc brake of self-energising design, comprising
a. a brake calliper (32, 20), at least one application-side and one reaction-side brake pad (2, 3), and a brake disc (1),
b. an electromechanical drive (27) and an application device for applying the brake pad, which application device has a self-energising device,
c. a single-part or multi-part actuating plunger (11) which acts directly or via a pressure plate (4) on the application-side brake pad, and
d. at least one adjusting device (18, 9; 19, 10) for adjusting for pad and/or disc wear,
**characterised in that**
e. the actuating device has a brake rotary lever (15), which acts on the actuating plunger (11), wherein the actuating plunger (11) is pivotably mounted on the brake rotary lever (15) and on the pressure plate (4) or on the application-side brake pad (3),
f. in such a way that it can follow a movement of the application-side brake pad (3) in the circumferential direction of the brake disc (1) when the disc brake is applied.

2. Disc brake according to claim 1, **characterised in that** the actuating plunger (11) is pivotably mounted on the brake rotary lever (15) and on the pressure plate (4) or on the application-side brake pad (3) with an intersecting axis of rotation.

3. Disc brake according to claim 1 or 2, **characterised in that** the actuating plunger (11) is pivotably fastened to the brake rotary lever (15) and to the pressure plate (4) or to the application-side brake pad in such a way that tensile and compressive forces can be transmitted to an electric motor (27) acting as the electromechanic drive and to the application-side brake pad (3).

4. Disc brake according to claim 1, 2 or 3, **characterised in that** the actuating plunger (11) is mounted on and fastened to an eccentric rotational axis (E) of the brake rotary lever (15) and to the pressure plate (4) or to the application-side brake pad (3) in such a way that said actuating plunger (11) can compensate pivoting movements of the brake rotary lever (15) and tangential sliding movements of the brake pad (3) and, if appropriate, of the pressure plate (4) by pivoting in two mutually perpendicular pivoting directions.

5. Disc brake according to any of the preceding claims, **characterised in that** the actuating plunger (11) is provided, at its two mounting ends, with pivot bearings, for example plain spherical bearings, with the transmission of force taking place both on the brake rotary lever side and also on the pressure plate side by means of pivot pins, with the pivot pin of the brake rotary lever being arranged such that its axis of rotation intersects that of the pressure plate (4).

6. Disc brake according to any of the preceding claims, **characterised in that** the actuating plunger (10) is of multi-part design.

7. Disc brake according to any of the preceding claims, **characterised in that** a threaded drive is arranged between the electric motor (27) and the brake rotary lever (15).

8. Disc brake according to any of the preceding claims, **characterised in that** the actuating plunger (10) is designed as an actuating plunger assembly which is axially variable in length, in particular telescopic, for compensating for pad and/or disc wear.

9. Disc brake according to claim 8, **characterised in that** the actuating plunger assembly comprises the actuating plunger (10) itself, a threaded spindle (16) and a spherical bearing housing (17).

10. Disc brake according to claim 8 or 9, **characterised in that** the actuating plunger assembly is coupled by means of a synchronisation gearing to an adjusting device (9, 18 and 10, 19) for transmitting the adjusting rotary movement.

11. Disc brake according to any of claims 8 to 10, **characterised in that** the actuating plunger assembly is connected to a gear (35) which is designed such that, when the brake is not actuated, there is a narrow degree of tooth play with respect to further coupled gears (36, 37), and that, when the brake is actuated, the gears are placed so far out of engagement by the application movement of the actuating plunger that the pivoting movement of the actuating plunger (10) which takes place then is enabled.

12. Disc brake according to any of the preceding claims, **characterised in that** a rotary bearing on the brake rotary lever eccentric axle is designed as barrel roller bearing.

13. Disc brake according to any of the preceding claims, **characterised in that** at least one rotary bearing or two rotary bearings is/are provided, which are designed as spherical pivots or as a bearing bush which is flared slightly in terms of diameter toward the two end regions.

## Revendications

1. Frein à disque (1) à commande électromécanique à auto-amplification, comprenant
a) un étrier de frein (32, 20), au moins une garniture de frein (2, 3) du côté de serrage de frein et du côté de réaction, ainsi qu'un disque de frein (1),
b) un dispositif moteur électromécanique (27) et un dispositif de serrage de frein pour le serrage de la garniture de frein, qui comprend un dispositif auto-amplificateur,
c) et un poussoir d'actionnement (11) qui agit sur ladite garniture du côté de serrage de frein directement ou via une plaque de pression (4), et
d) au moins un dispositif de rattrapage (18, 9 ; 19, 10) pour le rattrapage de l'usure de ladite garniture et/ou du disque,
**caractérisé en ce**
e) **que** ledit moyen de rattrapage comprend un levier rotatif de freinage (15), qui agit sur ledit poussoir d'actionnement (11), audit poussoir d'actionnement (11) étant logé de façon pivotante audit levier rotatif de freinage (15) et à ladite plaque de pression ou à ladite garniture de frein (3) du côté de serrage de frein,
f) de manière, qu'il puisse suivre un mouvement de ladite garniture de frein (3) du côté de serrage de frein en direction périphérique du disque de frein (1) quand le frein à disque est serré.

2. Frein à disque selon la revendication 1, **caractérisé en ce que** ledit poussoir d'actionnement (11) est logé de façon pivotante audit levier rotatif de freinage (15) et à ladite plaque de pression (4) ou à ladite garniture de frein du côté de serrage de frein (3) à un axe de révolution croisant.

3. Frein à disque selon la revendication 1 ou 2, **caractérisé en ce que** ledit poussoir d'actionnement (11) est fixé de façon pivotante audit levier rotatif de freinage (15) et à ladite plaque de pression (4) ou à ladite garniture de frein du côté de serrage de frein (3) d'une telle manière, que des forces de traction et des forces de pression soient transmissibles à un moteur électrique (27) servant comme dispositif électromoteur et à ladite garniture de frein (3) du côté de serrage de frein.

4. Frein à disque selon la revendication 1, 2 ou 3, **caractérisé en ce que** ledit poussoir d'actionnement (11) est logé et fixé à un axe de révolution excentrique (3) dudit levier rotatif de freinage (15) et à ladite plaque de pression (4) ou ladite garniture de frein (3) du côté de serrage de frein d'une telle manière, qu'il puisse compenser des mouvements de pivotement dudit levier rotatif de freinage (15) et des mouvements de déplacement périphériques de ladite garniture de frein (3) et éventuellement de ladite plaque de pression (4) par pivotement en deux directions de pivotement orthogonales l'une sur l'autre.

5. Frein à disque selon une quelconque des revendications précédentes, **caractérisé en ce que** ledit poussoir d'actionnement (11) est muni des paliers de pivotement, par exemple des paliers lisses à calottes, à ses deux extrémités de montage, à la transmission de forces se faisant via des boulons d'articulation non seulement du côté dudit levier rotatif de freinage mais aussi du côté de ladite plaque de pression, audit boulon d'articulation dudit levier rotatif de freinage étant disposé à axe de révolution croisant par rapport audit boulon d'articulation de ladite plaque de pression (4).

6. Frein à disque selon une quelconque des revendications précédentes, **caractérisé en ce que** ledit poussoir d'actionnement (11) est réalisé en plusieurs parties.

7. Frein à disque selon une quelconque des revendications précédentes, **caractérisé en ce qu'**un mécanisme à vis est disposé entre ledit moteur électrique (27) et ledit levier rotatif de freinage (15).

8. Frein à disque selon une quelconque des revendications précédentes, **caractérisé en ce que** ledit poussoir d'actionnement (10) est configuré sous forme d'un module à poussoir d'actionnement axialement variable en longueur, en particulier variable de façon télescopique, afin de compenser l'usure à la garniture et/ou le disque.

9. Frein à disque selon la revendication 8, **caractérisé en ce que** ledit module à poussoir d'actionnement comprend ledit poussoir d'actionnement proprement dit (10), une broche filetée (16) et un boîtier de palier d'articulation (17).

10. Frein à disque selon une quelconque des revendications précédentes, **caractérisé en ce que** ledit module à poussoir d'actionnement est couplé via un réducteur de synchronisation à un moyen de rattrapage (9, 18 et 10, 19) pour la transmission du mouvement rotatif de rattrapage.

11. Frein à disque selon une quelconque des revendications précédentes, **caractérisé en ce que** ledit module à poussoir d'actionnement est relié à une roue dentée (35) qui est configurée d'une telle façon, que, quand le frein n'est pas actionné, il y ait un jeu entre-dents étroit par rapport à des autres roues dentées couplées (36, 37), et **en ce que**, quand le frein est actionné, les roues dentées soient mises hors prise par le mouvement de serrage dudit poussoir d'actionnement par une telle distance que le mouvement de pivotement ensuite réalisé dudit poussoir d'actionnement (10) soit permis.

12. Frein à disque selon une quelconque des revendications précédentes, **caractérisé en ce qu'**un palier pivotant à l'axe excentrique dudit levier rotatif de freinage est configuré sous forme d'un palier à roulement à rotule.

13. Frein à disque selon une quelconque des revendications précédentes, **caractérisé en ce qu'**au moins un ou deux paliers pivotants sont disposés, qui sont configurés sous forme des axes de révolution en boule ou d'un coussinet à un diamètre légèrement élargi vers les deux extrémités terminales.
